# EUROPÄISCHE PATENTSCHRIFT

(11) **EP 0 734 914 B1**
(45) Veröffentlichungstag und Bekanntmachung des Hinweises auf die Patenterteilung: **13.05.1998**
(21) Anmeldenummer: 96101802.5
(22) Anmeldetag: 08.02.1996
(51) Int. Cl.: B60R 21/20, F16F 7/12

(54) **Airbagaufnahmeprofil**
Profile containing an airbag
Profilé contenant un coussin de sécurité gonflable

(30) Priorität: 01.04.1995 DE 19512378
(43) Veröffentlichungstag der Anmeldung: 02.10.1996
(73) Patentinhaber: VAW Aluminium AG, D-53117 Bonn (DE)
(72) Erfinder: Dede, Carsten, Dipl.-Ing., D-53332 Roisdorf (DE); Branski, Thomas B., Glendale, AZ 85310 (US)
(74) Vertreter: Müller-Wolff, Thomas, Dipl.-Ing.

(56) Entgegenhaltungen:
- WO-A-91/14110
- DE-A- 4 016 681
- GB-A- 2 265 337
- US-A- 5 342 082
- US-A- 5 482 313
- HÜTTE GESELLSCHAFT FÜR TECHNISCHE INFORMATIONEN MBH, BERLIN 'Hütte des Ingenieurs Taschenbuch, Physikhütte, Band 1', 1971, VERLAG VON WILHEM ERNST & SOHN, BERLIN XP002008824 * Seite 136 - Seite 138 *
- DR.-ING. J. RUGE 'Handbuch der Schweisstechnik, Band 1: Werkstoffe', 1980, SPRINGER-VERLAG, BERLIN XP002008825 * Seite 36 *

## Beschreibung

Die Erfindung betrifft ein Airbagaufnahmeprofil, bestehend aus einem Gehäuseteil mit mindestens zwei Profilschenkeln, das in ein Cockpit integriert ist und einen Airbag sowie einen Generatorträger aufnimmt, wobei die Profilschenkel zur Vergrößerung des Stoßabsorptionsvermögens leicht deformierbar sind.

Ein Airbagaufnahmeprofil der eingangs genannten Art ist aus der US 5 342 082 A bekannt, die den Merkmalen des Oberbegriffs entspricht. Die Vergrößerung des Stoßabsorptionsvermögens wird danach durch eine gewellte Ausbildung von Teilbereichen der Profilschenkel oder duch Perforationen erreicht.

Zur Optimierung des Insassenschutzes ist es notwendig, eine Verformung des Profilschenkels zu ermöglichen.

Diese Maßnahmen sind insbesondere relevant bei einer Nichtbenutzung des Anschnallgurtes und bei einer Verzögerung des Aufpralls, die unterhalb der Auslösegeschwindigkeit des Airbagsystems liegt. Wegen der vorliegenden geometrischen Grenzabmaße im Armaturenbereich stehen nur geringe räumliche und stoffliche Variationsmöglichkeiten zur Verfügung.

Aufgabe der vorliegenden Erfindung ist es, unter den erwähnten räumlich begrenzten Verhältnissen eine technisch einfache aber hochwirksame Ausbildung eines Airbagaufnahmeprofils vorzuschlagen, das im Falle des Nichtauslösens eines Airbags einen optimierten Insassenschutz gewährleistet.

Diese Aufgabe wird erfindungsgemäß durch die in dem kennzeichnenden Teil des Anspruchs 1 angegebenen Merkmale gelöst. Bei einer gezielten Schwächung oder Deformation der Profilschenkel durch eine thermische Behandlung kann das Stoßabsorbtionsvermögen des Airbaggehäuses verbessert werden, ohne daß die Funktion des Airbags im Gebrauchsfalle eingeschränkt ist.

Im Folgenden wird die Erfindung anhand von drei Ausführungsbeispielen näher erläutert. Es zeigen:
- Figur 1: Perspektivische Darstellung der Einbausituation für einen Beifahrer-Airbagprofil;
- Figur 2: Ausschnitt einer Detailprofilkante nach Fig. 1 mit einer Wärmeeinflußzone.

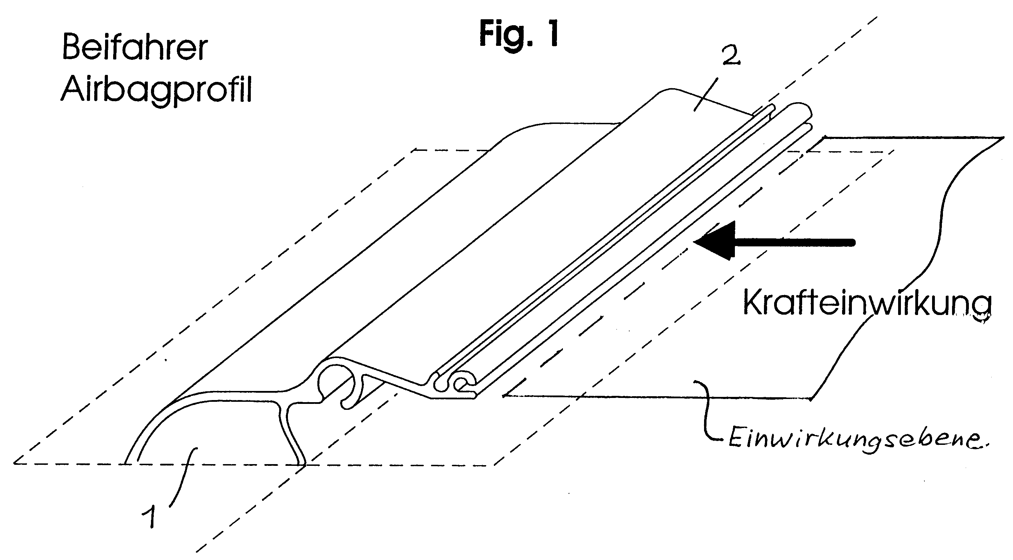

In Figur 1 ist die obere Hälfte eines Airbagaufnahmeprofils perspektivisch dargestellt. Man erkennt eine Detaillprofilkante des Airbagaufnahmeprofils, bestehend aus einem Gehäuseteil mit mindestens zwei Schenkeln, wobei der untere Profilschenkel unterhalb der gestrichelten Schnittebene nicht dargestellt ist. Zur weiteren üblichen Gestaltung des Airbagaufnahmeprofils wird auf die US 5 342 082 A verwiesen.

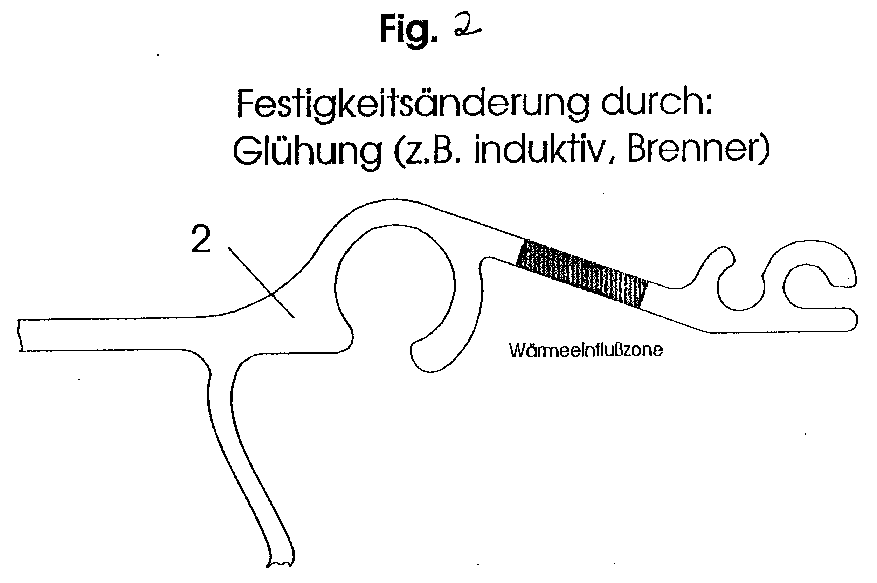

Der Profilschenkel 2 ist in Figur 2 in vergrößerter Form dargestellt.

Um das Stoßabsorbtionsvermögen zu verbessern, wird, eine Festigkeitsänderung durch Glühen, entweder induktiv oder mittels handelsüblicher Brenner, durchgeführt. Dadurch wird eine Wärmeeinflußzone geschaffen, in der ein rekristallisiertes Gefüge vorliegt, das sich leichter verformen läßt.

Beispielsweise läßt sich für eine AlMgSi-Legierung eine Wärmeeinflußzone mit einer Ausdehnung von 3-4 mm dadurch erreichen, daß der Verbindungsschenkel 2 mit einem Induktor auf eine Temperatur von 420°C für 30 sek. gebracht wird und danach langsam abgekühlt wird. Das damit erzielte rekristallisierte Gefüge erweist sich als besonders stoßabsorbtionsfreudig, wobei die äußere Kontur des Airbagaufnahmeprofils unverändert bleiben konnte (Siehe Figur 2).

Durch die erfindungsgemäße Ausbildung einer Wärmeeinflußzone wird beim Stauchen der Profilschenkel eine erhöhte Kraftaufnahme ermöglicht, d.h. ein überlicherweise in Kraftrichtung/Stoßrichtung verlaufender Profilschenkel wird so gestaltet, daß die Kraft in mehreren "Einwirkebenen" aufgenommen wird. "Einwirkebenen" sind die Gestaltungsebenen des oder der Profilschenkel (siehe Figur 1).

Die genannte Maßnahme führt beim Nichtauslösen des Airbags dazu, daß eine in Richtung der Profilschenkel auf das Aufnahmeprofil einwirkende Kraft abgelenkt und die dabei auftretende Energie in Verformungsenergie umgesetzt werden kann. Somit lassen sich durch thermische Beeinflussung und durch konstruktive Gestaltung eine deformierbare Profilzone schaffen, die bei Nichtbenutzung des Gurtes oder unterhalb der Auslösegeschwindigkeit des Airbagsystems als vollwirksamer Insassenschutz dienen können. Die Forderung nach ausreichender Festigkeit bei Montage und Einbau sowie bei einer Deformation im Benutzungsfall des Airbags werden ebenso erfüllt wie die bauseitig vorhandenen Anforderungen hinsichtlich der geometrischen Grenzabmessungen.

## Patentansprüche

1. Airbagaufnahmeprofil, bestehend aus einem Gehäuseteil mit mindestens zwei Profilschenkeln, das in ein Cockpit integriert ist und einen Airbag sowie einen Generatorträger aufnimmt,
dadurch gekennzeichnet,
daß die Profilschenkel ein rekristallisierbares Gefüge aufweisen
und daß zur Vergrößerung des Stoßabsorbtionsvermögen das Gefüge mindestens eines der Profilschenkel (2) im Bereich zwischen Generatorträger (1) und Cockpit thermisch behandelt ist.

2. Airbagaufnahmeprofil nach Anspruch 1,
dadurch gekennzeichnet,
daß das Widerstandsmoment mindestens eines der Profilschenkel (2) reduziert ist.

3. Airbagaufnahmeprofil nach Anspruch 1,
dadurch gekennzeichnet,
daß die Festigkeit mindestens eines der Profilschenkel (2) lokal reduziert ist.

4. Airbagaufnahmeprofil nach Anspruch 1,
dadurch gekennzeichnet,
daß mindestens einer der Profilschenkel (2) so gestaltet ist, daß er beim Aufprall faltenartigen verformt wird.

## Claims

1. An air bag receiving profile consisting of a housing part which is provided with at least two profile arms, which is integrated into a cockpit and which receives an air bag and a generator carrier,
characterised in
that the profile arms comprise a recrystallisable structure and that, for the purpose of increasing the impact absorption capacity, the structure of at least one of the profile arms (2) is heat-treated in the region between the generator carrier (1) and the cockpit.

2. An air bag receiving profile according to claim 1,
characterised in
that the resistance moment of at least one of the profile arms (2) is reduced.

3. An air bag receiving profile according to claim 1,
characterised in
that the strength of at least one of the profile arms (2) is locally reduced.

4. An air bag receiving profile according to claim 1,
characterised in
that at leat one of the profile arms (2) is designed in such a way that, upon impact, it is deformed in a fold-like way.

## Revendications

1. Profilé pour logement de coussin gonflable de sécurité composé d'un boîter avec au moins deux côtés, intégré dans un cockpit et qui loge un coussin gonflable de sécurité ainsi qu'un support de générateur, **caractérisé en ce que** les côtés du profilé présentent une structure recristallisable et que la structure d'au moins l'un des côtés du profilé (2) dans la zone entre le support de générateur (1) et le cockpit est traitée thermiquement afin d'augmenter la puissance d'absorption des chocs.

2. Profilé pour logement de coussin gonflable de sécurité selon la revendication 1, **caractérisé en ce que** le moment de résistance d'au moins un côté du profilé (2) est réduit.

3. Profilé pour logement de coussin gonflable de sécurité selon la revendication 1, **caractérisé en ce que** la solidité d'au moins un côté du profilé (2) est réduite localement.

4. Profilé pour logement de coussin gonflable de sécurité selon la revendication 1, **caractérisé en ce qu'au** moins un des côtés du profilé (2) est conçu de façon à être déformé en plis lors du choc.
